# EUROPEAN PATENT APPLICATION

(11) **EP 0 766 458 A1**
(43) Date of publication of application: **02.04.1997**
(21) Application number: 96307133.7
(22) Date of filing: 30.09.1996
(51) Int. Cl.: H04N 3/27, H04N 3/223, H04N 5/33

(54) **Aspect ratio features for display having RS-170 timing**

(30) Priority: 29.09.1995 US 604876; 20.02.1996 US 603664
(71) Applicant: HE HOLDINGS, INC. dba HUGHES ELECTRONICS, Los Angeles, CA 90045-0066 (US)
(72) Inventor: Herbst, Stephen J., Redondo Beach, CA 90278 (US); Jones, Christopher S., Los Angeles, CA 90066 (US); Orr, Jeffrey E., Long Beach, CA 90808 (US); Hayes, Donald O., Oceanside, CA 92056 (US); Ziebold, Kent, Vista, CA 92084 (US)
(74) Representative: Jackson, Richard Eric

(57) **Abstract**

A variable aspect ratio display (100) is provided for use in a thermal imaging system. The display includes a video signal processing circuit having amplifiers (118, 119) for amplifying the video signal. The circuit also includes signal adjusters (120, 121) for adjusting the amplifier between first and second gain levels. The amplifiers produce a first video signal when adjusted to the first gain level and a second video signal when adjusted to the second gain level, with the second video signal having a wider associated azimuth field of view in than the first video signal. A switch (116) is provided for switching the signal adjusters (120, 121) between first and second gain levels.

## Description

### BACKGROUND OF THE INVENTION

### 1. Technical Field

The present invention relates generally to cathode ray tube displays, and in particular to a thermal imaging system display that is switchable between a standard RS-170 output and an output having a broader azimuth field of view than that produced by the standard RS-170 output.

### 2. Discussion

Scanning thermal imaging systems are used in a variety of applications, including surveillance systems and target detection/recognition systems. Such systems typically incorporate a telescopic lens assembly coupled to a scanner. The scanner scans energy from a scene through an imager lens assembly onto a detector array having a plurality of photoelectrically responsive detector elements perpendicular to the scan direction. Each of these detector elements provides an electric signal proportional to the flux of infrared light on the particular detector element. Electric signals generated from the detector elements are subsequently processed by system sensor electronics to create an image that is displayed on a system output device. To improve sensitivity, some of these systems incorporate detectors parallel to the scan direction. The output of these detectors are delayed in time from each other such that, ideally, the scanned image is output simultaneously on all of the parallel detectors. The delayed outputs are then summed (integrated). This process is referred to as time delay and integrate (TDI).

The preferred implementation of the above-mentioned system output device used in these thermal imaging systems is a conventional cathode ray tube (CRT) display having a standard RS-170 video output. Such a display provides a system operator with a 4:3 horizontal/vertical aspect ratio. Thus, the display azimuth field of view is somewhat larger than the display elevation field of view.

However, for many target detection applications, it is crucial that the system operator utilizing a system display has as large a situational view as possible in the azimuth field of view to effectively locate and detect potential targets. The above-mentioned conventional RS-170 display, while providing a certain degree of situational awareness, has an azimuth field of view that is somewhat limited for thermal imaging targeting applications. Therefore, it is desirable to utilize a display having an azimuth field of view much broader than the standard RS-170 format.

While it is desirable to have a display with a wider azimuth field of view for targeting applications, a standard RS-170 display is also necessary for other applications, such as replaying and viewing a video taped event for system training purposes or displaying the image from a standard visible camera. While it is desirable to have both types of displays available, it is highly impractical for both types of displays to be implemented in a thermal imaging system, due to the associated expense of implementing two displays and due to the limited space requirements associated with such thermal imaging systems.

Therefore, what is needed is a video display that is capable of providing either a standard 4:3 aspect ratio or a larger azimuth field of view, and that is manually switchable between the two modes of operation, thereby minimizing cost of implementation and space required for implementation.

### SUMMARY OF THE INVENTION

In accordance with the teachings of the present invention, a thermal imaging system display is provided for displaying an output video signal representing a detected target scene. The display is switchable between a 4:3 aspect ratio and a larger 2.4:1 aspect ratio providing a higher degree of situational awareness for a system operator. The video display according to the present invention eliminates the need for implementation of two separate displays and thus minimizes both system cost and implementation area.

In particular, the present invention provides a thermal imaging target detection unit including a display for displaying a video signal of a detected target scene. The unit also includes a video signal processing circuit having at least one amplifier for amplifying the video signal. The circuit also includes a signal adjuster for adjusting the amplifier between first and second gain levels. The amplifier produces a first video signal when adjusted to the first gain level and a second video signal when adjusted to the second gain level, with the second video signal having a wider associated azimuth field of view than the first video signal. A switch is provided for switching the signal adjuster between the first and second gain levels.

### BRIEF DESCRIPTION OF THE DRAWINGS

Other objects and advantages of the invention will become apparent upon reading the following detailed description and upon reference to the drawings, in which:
FIG. 1 illustrates an LAV-25 light armored vehicle in which the present invention is implemented;
FIG. 2 is a perspective view of a thermal imaging system in which the preferred embodiment of the present invention is implemented;
FIG. 3 is a partial exploded view of the thermal imaging system shown in FIG. 2;
FIG. 4 is a front elevational view of the detector element array implemented in the thermal imaging system shown in FIG. 2;
FIG. 5 is a block schematic diagram of the thermal imaging system of the present invention;
FIGS. 6-6A are block schematic diagrams of system electronics of the thermal imaging system of the present invention;
FIG. 7 is a block schematic diagram of the electronics used to implement the video display according to a preferred embodiment of the present invention; and
FIG. 8 illustrates the switchable aspect ratios of the display shown in FIG. 7.

### DETAILED DESCRIPTION OF THE PREFERRED EMBODIMENT

The following description of the preferred embodiments is merely exemplary in nature and is in no way intended to limit the invention or its application or uses.

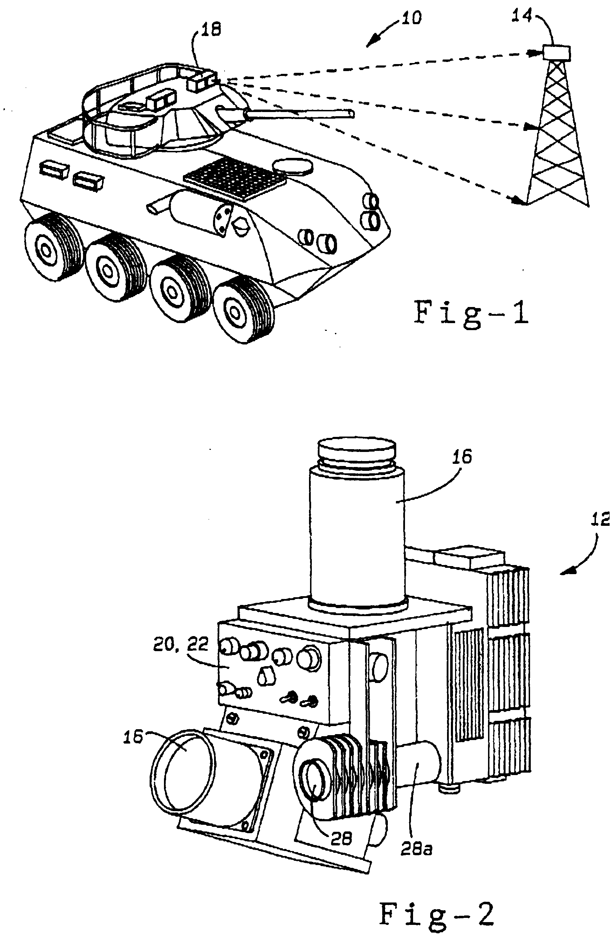

Referring to the drawings, FIG. 1 shows an LAV-25 light armored vehicle 10 in which the preferred embodiment of the present invention is implemented. As shown in FIGS. 1 and 2, the present invention is implemented as part of a thermal imaging unit 12, which processes energy reflected from a detected target scene 14 back through a system telescope assembly 16 coupled to an externally mounted head mirror 18.

Preferably, the thermal imaging unit 12 is a Hughes Infrared Equipment (HIRE) thermal imaging sensor unit. The HIRE unit is a high performance light weight modular fire control sight and thermal imaging system that is capable of providing superior vision capability through total darkness, smoke, dust, and other types of adverse conditions. The HIRE system may be implemented in a wide variety of environments, including in a variety of armored vehicles, such as the LAV-25, Piranha, Desert Warrior, and LAV-105. The thermal imaging unit 10 provides stand alone thermal imaging capability, but can also be configured for use with TOW missile fire control systems. The unit incorporates several commercially available major components, thereby reducing logistics requirements through commonality of such things as repair facilities, support equipment, training programs and spare parts. The EFL compensator of the present invention enables the thermal imaging sensor unit to provide a significant improvement in imaging unit image quality and range performance over conventional thermal imaging systems as will now be described.

Referring to FIGS. 1-5, the telescope assembly 16, through which target searching and sighting functions are achieved, is implemented in a protected environment within the vehicle 10. Preferably, the telescope assembly 16 may be selectively switched to either a narrow field of view or a wide field of view as desired through switches on the gunner and commander control panels 20, 22. The head mirrors 18 are implemented to relay a detected scene to the telescope assembly 16. Subsequent to target scene thermal energy signal being processed by the thermal imaging unit, as will be described below, the scene is viewed through a gunner display 19 operatively coupled to a display control panel 20 and a commander display 21 coupled to a commander display control panel 22.

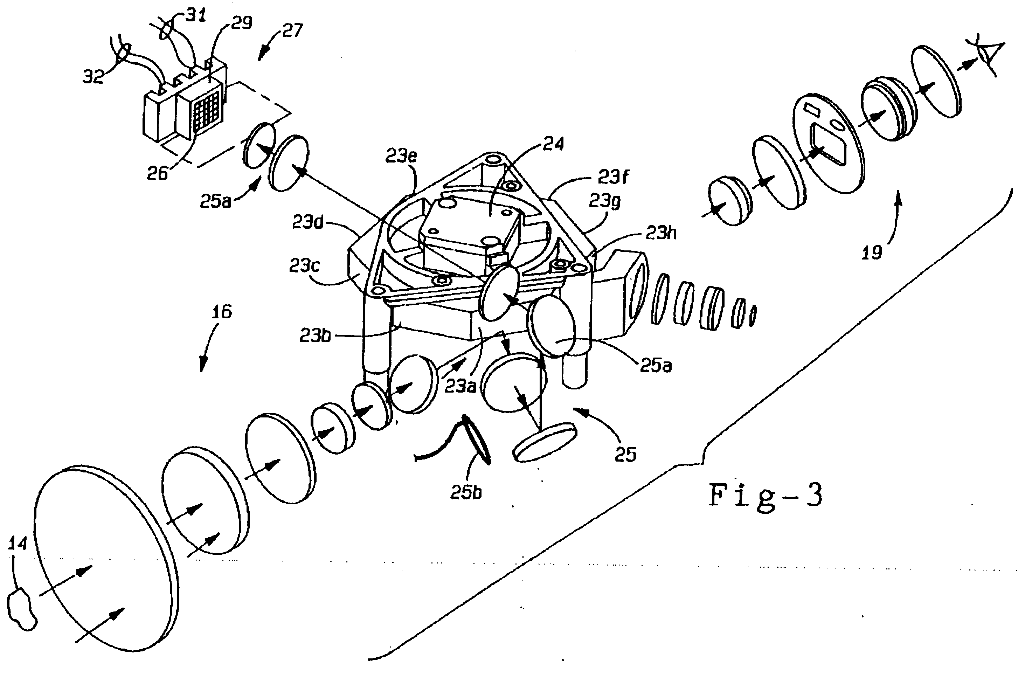

As shown in FIG. 3, energy from the detected scene is transmitted through the thermal imaging unit 12 to a polygonal, mirrored scanner 23 rotated by a scanner motor 24. The scanner includes 8 facets 23a-23h, each of which is cut at an angle to effect displacement of the scanned scene energy on the detector array by a discrete amount. The cut and displacement effected by each facet is shown below:

**Table I**

| **FACET** | **CUT** | **DETECTOR ARRAY ENERGY DISPLACEMENT (IN PIXELS)** |
|---|---|---|
| 23a | Normal | 0 |
| 23b | Interlaced | -½ |
| 23c | Up | +1 |
| 23d | Interlaced | -½ |
| 23e | Down | -1 |
| 23f | Interlaced | -½ |
| 23g | Normal | 0 |
| 23h | Interlaced | -½ |

As the scanner rotates, the scanner mirrors reflect the scene energy at successively varying angles through an imager assembly shown generally at 25. The imager assembly includes imager lenses, such as lens 25a, which image the scene onto a detector array 26 housed within a detector assembly 27. The imager assembly 25 also includes an imager optics temperature sensor 25b for monitoring the temperature of the imager. The detector assembly 27 is housed within a dewar 28 and cooled by a cooler 28a to cryogenic temperatures. A cold shield 29 housed within the dewar 28 limits the thermal energy that can be seen by the detector such that the detector elements only detect scene energy input through the telescope assembly optics and not other peripheral forms of energy input into the system, such as energy from the warm sides of the housing. The cold shield thereby reduces input noise and thereby improves overall system image quality.

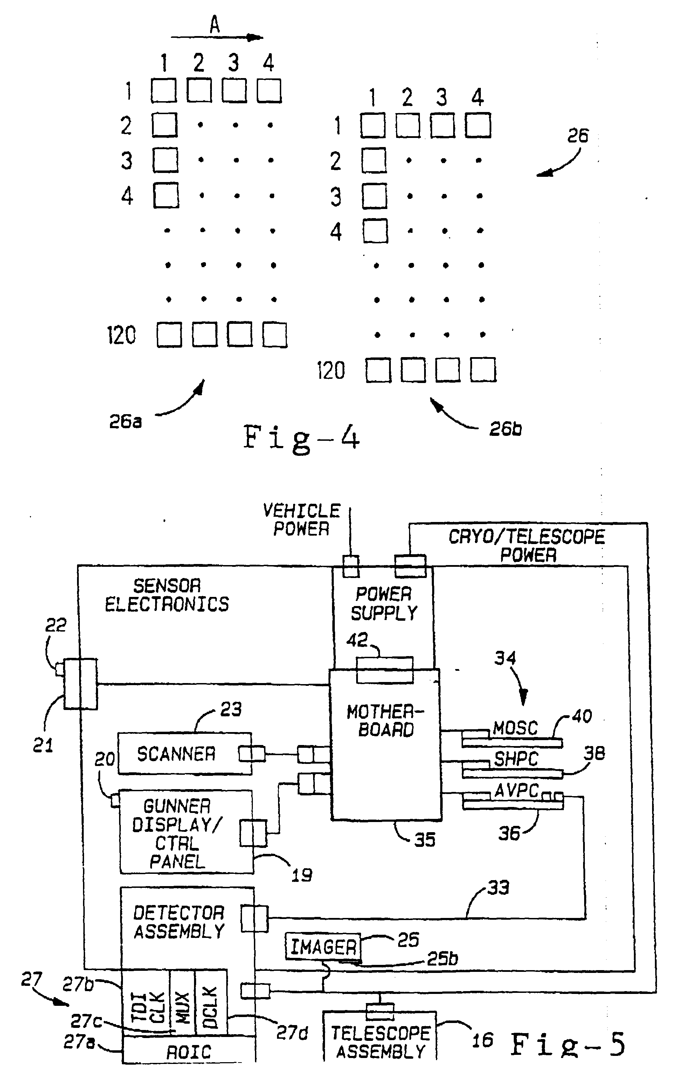

As shown partially in FIG. 3 and more fully in FIG. 4, the detector array 26 of the present invention consists of two staggered 120 x 4 subarrays 26a, 26b of detector elements, with each element being sensitive to light in the infrared spectrum and each having a detector element output. As the scanner scans the image of the scene across the detector in the direction indicated by the arrow A shown in Figure 4. The output of each detector element is input to a readout integrated circuit (ROIC) 27a (FIG. 5) associated with the detector assembly which samples the output, provides the time delay and integration (TDI) of the four parallel detector elements in each detector element row, and multiplexes the 240 resulting TDI detector channels into 4 video output channels 31, 32, with output channels 31 carrying output signals from the first 120 x 4 detector subarray 26a, and output channels 32 carrying output signals from the second detector subarray 26b. The ROIC includes a TDI clock 27b that determines when the detector outputs are sampled at the TDI, a multiplexer 27c, and a higher speed detector clock 27d for the ROIC multiplexer, which preferably has a minimum 60:1 sample period.

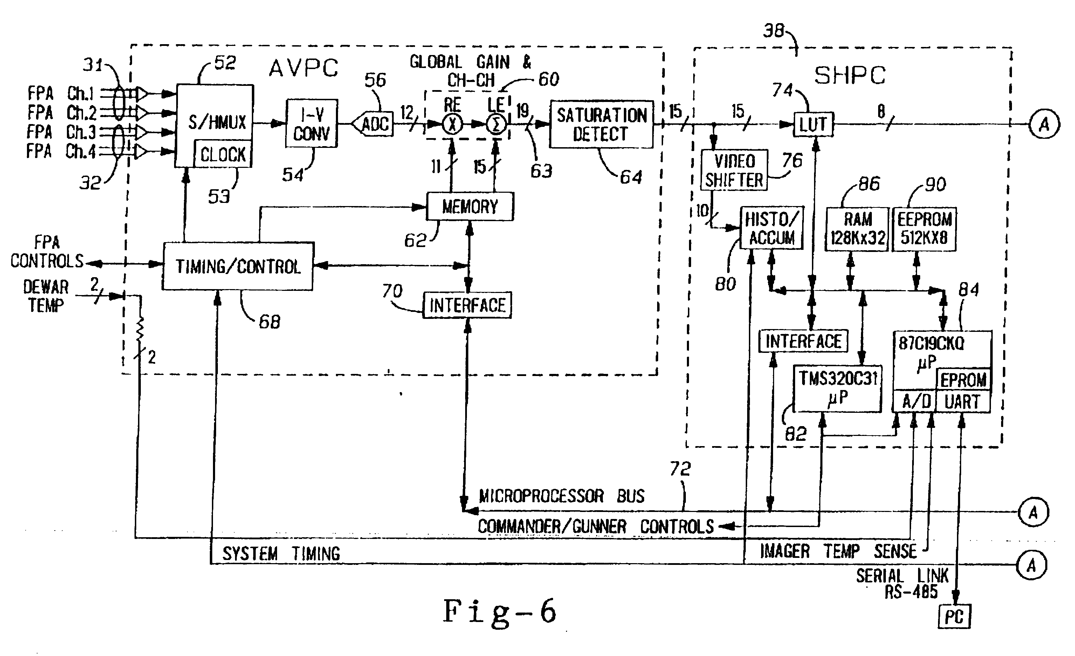

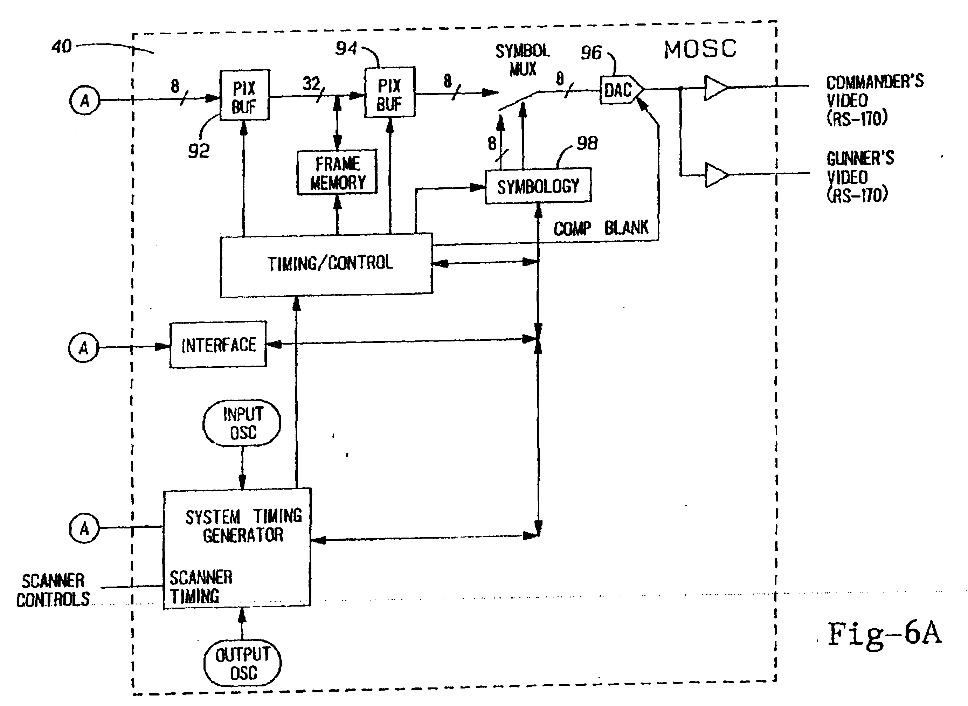

In the preferred embodiment, the 4 multiplexed output channels of the detective assembly are further multiplexed into one channel by the signal processing electronics at an input high speed clock (HCLK) rate which preferably has a minimum 240:1 sample period and is associated with system electronics described below in reference to FIG. 6. An EFL compensator varies the sample rate of the DCLK 27d to control the sample rate of the TDI clock 27b.

Presently implemented detector arrays typically feature 60 to 120 detector elements, with each having an associated output wire. Thus, the detector array of the present invention exhibits higher resolution due to the additional detector elements. Further, the detector array of the present invention utilizes multiplexed detector array output lines, thereby minimizing detector element output wires and thus minimizing area required to implement the array and facilitating ease of assembly and repair.

Referring now to FIG. 5, operation of the imaging system components is controlled generally by the system electronics 34. The system electronics 34 are implemented on three cards coupled to a system mother board 35. The cards include an analog video processing card (AVPC) 36, a scene based histogram processor card (SHPC) 38 and a memory output symbology card (MOSC) 40. The associated functions of each of these cards will be discussed in greater detail below. Also coupled to the mother board 35 is a power supply card 42 that receives power input from the vehicle in which the system is implemented and outputs power to various system components at voltage levels required by the individual system components.

Referring now in detail to FIG. 6, an overall block diagram showing the components implemented on the three cards 36, 38 and 40 shown. Referring first to the AVPC card 36, channel outputs 31, 32 are input into an S/HMUX 52 having an associated high speed system multiplier clock (HCLK) 53. Preferably, all 960 detector elements (240 pixels) are clocked during the clock sample period. The S/HMUX 52 is preferably a HUGHES custom integrated circuit, Part No. 6364060PGA-DEV, designed to sample and further multiplex the multiplexed detector element outputs. These multiplexed signals are sampled at an adjustable sample rate. However, for further signal processing, the signals are converted to voltage signals through I-V converter 54. once these signals are converted, the signals are digitized by an analog to digital converter 56.

After being converted into digital signals, the detector element output signals are input into a signal equalizer 60. The signal equalizer 60 adds an associated gain and level value, stored in a memory 62, for each one of the 240 detector pixel elements to correct any gain and level differences from each of the detector pixel signals so that the multiplexed digital signal output at 63 is uniform, thereby enhancing picture quality.

Still referring to the AVPC card 36, the digitized input signal (to the signal equalizer 60) is 12 bits. However, the signal equalizer, in correcting signal gain and level differences, subsequently increases the digital signal output to 19 significant bits. As the signal contains only 15 bits of usable data, saturation detector 64 sets all data above the 15 bit range to a saturation level of 1 and all data below the 15 bit range to 0. Therefore, only the useful data within the 15 bit range is output to the SHPC card 38. The AVPC card also includes a timing/control processing unit 68 implementing the clocks 53 and line timing for clocking multiplexed signals from the S/HMUX during a sample period. Preferably, the line timing HCLK has a clock sample rate of 240 TDI channels per sample period plus 16 clocks dead time. However, this rate may be varied by the present invention as necessary as will be described below. The AVPC card also includes an interface 70 that connects AVPC card components to a system microprocessor bus 72.

Turning now to the SHPC card 38, the signal output from the saturation detector 64 is input into a look-up table 74. Generally, the output dynamic range of the digitizing and signal equalizing process is greater than the maximum dynamic range of traditional image displays. Moreover, there are areas of the output dynamic range that have minimal or no information. Therefore, the output signal of the digitizing and signal equalizing process is input into a look-up table 74 to compress the information into display dynamic range. The look-up table provides a programmable method of mapping the larger input dynamic range into the smaller output dynamic range. The mapping can be varied continuously either based on manual input from a system operator or based on an automatic histogram-based method. Prior to the look-up table, the video is input to a histogram/accumulator 80. The histogram/accumulator 80 performs certain programmable functions, such as line summing, line grabbing, and histogramming of the digitized information. The look-up table 74 converts the 15 bit signal output from the saturation detector to an 8 bit output signal. The look-up table is preferably a 32k x 8 Random Access Memory (RAM) well known in the art such as Integrated Device Technology Model No. IDT71256, and can be varied continuously either based on manual input from a system operator or based on an automatic gain algorithm. The 15 bit signal output from the saturation detector is also converted to a 10 byte signal through a video shifter 76.

Also located on the SHPC card 38 are microprocessors 82 and 84. As discussed above, many functions are under microprocessor control. The microprocessor 84 performs numerous control-related operations associated with the control panel(s), controls the TDI clock rate for EFL compensation and histogram/accumulator function, and calculates the level equalization value for each pixel, the global level control value, and the look-up table values. The microprocessor 82 performs more system-based processing related functions and is operatively associated with a RAM 86 and an EEPROM 90. Both the RAM 86 and the EEPROM 90 store the software based commands controlling the electronic effective focal length compensator according to the preferred embodiment of the present invention, the function of which will be described in greater detail below.

Referring now to the MOSC card 40, the 8 bit output signal from the look-up table 74 is input through pixel buffers 92, 94 and output to both the gunner display 19 and the commander display 21 after being scan-converted via a frame memory and converted back to an analog signal through the digital to analog converter 96. Symbology may also be switched in for any pixel in the image signal by symbology processor 98 before being output through the digital analog converter 96. Such symbology data may include status indications, sighting cross hairs and instructional text at the bottom of either the commander or the gunner display.

Prior to being output to the display, the digitized signal is scan converted. Generally, the scanner scans the scene horizontally; thus, the data is multiplexed along vertical columns. Standard video displays, however, require the data to be output along horizontal lines. Therefore, the digitized data must be converted from the vertical column input format to a horizontal line output format. Moreover, because of the separation between the detector subarrays, the digitized data from the subarrays are delayed in time from each other. This delay must be removed. The delay is dependent of the imager's effective focal length and, because the data is digitized, correct removal of the delays depends upon correct compensation for the image focal length changes. A compensator provides both of these functions.

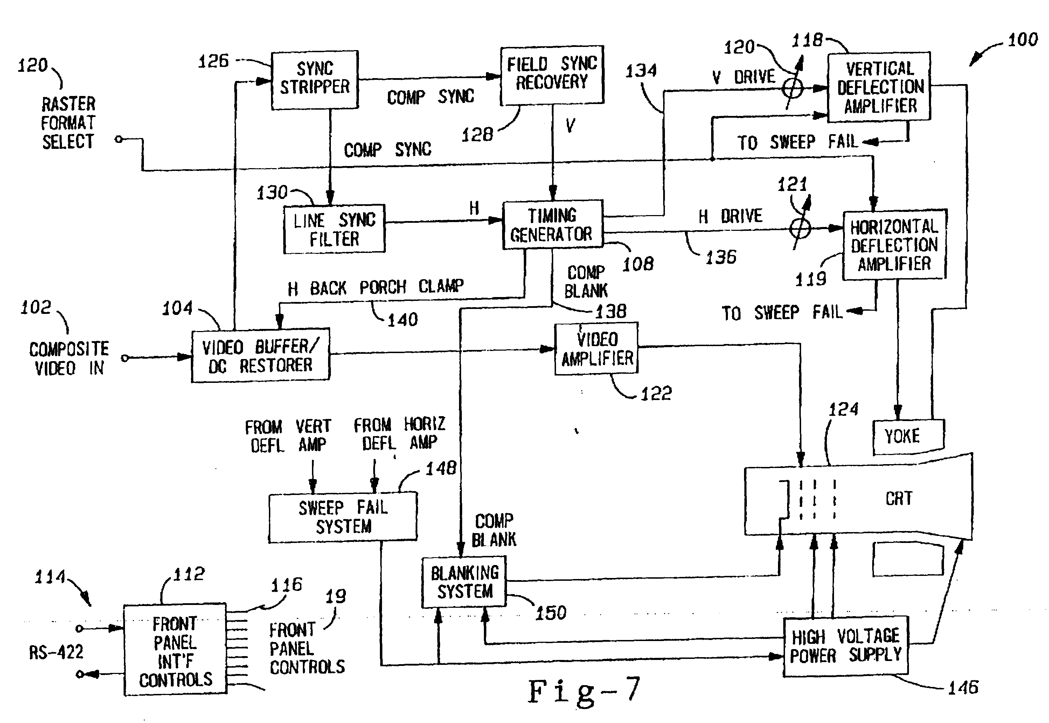

Referring now to FIG. 7, a block schematic diagram of the electronics used to implement the video display according to a preferred embodiment of the present invention is shown generally at 100. The display 100 may be implemented as both the gunner display 19 and the commander display 21 to provide a video representation of a detected scene as detected by the thermal imaging unit. However, for purposes of further discussion, reference will be made to the gunner display 19 and gunner control panel 20, with it being understood that the commander display 21 and commander control panel 22 are structured and operate in a manner identical to that of the gunner display and control panel.

Particularly, the display 100 may be utilized as a normal RS-170 output display for conventional television video applications such as playback of video tapes for system training purposes, or displaying imagery from standard visible cameras, with the display typically having a 4:3 aspect ratio. Alternatively, the display 100 may also be utilized for thermal imaging target detection and recognition applications such as forward looking infrared (FLIR) applications. For target detection and recognition applications, the display is switched to a thermal imaging mode application in which the normal TV video 4:3 aspect ratio is switched to a 2.4:1 aspect ratio, thereby giving the system operator a larger azimuth field of view and thus greater situational awareness.

The input to the display 100 is a composite video input signal 102 having standard RS-170 timing. The signal 102 is received from the system digital-to-analog converter 96 and includes a synchronizing signal, the actual target scene video signal, and a blanking signal. The composite video signal 102 is input into a video buffer/DC restorer 104. Gunner display control panel 19 is interfaced with the display 100 through the front panel interface controls, indicated generally at 112, through an RS-422 standard communication line 114. The front panel controls include a switch 116 in communication with raster format select line 120 for switching the aspect ratio features of the display 100. The switch, when toggled to one of two positions, sends a processor-controlled digital signal to vertical and horizontal deflection amplifiers 118, 119 to switch variable resistance networks, such as potentiometers 120, 121 coupled to the amplifiers 118, 119, respectively, to one of two resistance values. The potentiometers 120, 121 thus control the gain levels of the amplifiers 118, 119, and thus control how tightly the amplifiers displace an electron beam generated at the CRT 124 as the amplifiers steer the electron beam across the CRT grid screen 125.

The switch 116 can be controlled via the front panel as shown, or by a serial link to the processor 84. Preferably, the switch is digitally implemented such that when the switch is toggled to one of two positions, a 1 or a 0 is sent from the processor 84 to the display to adjust the resistance levels of the potentiometers 120, 121. It is contemplated that the switch could alternatively be implemented to automatically switch between two, or more, video aspect ratios upon receiving commands from the processor 84 without the need for the manual switch 116.

Still referring to FIG. 7, the RS-170 composite video signal is input into the video buffer/DC restorer 104 which processes the input video signal so that each of the 240 TDI video lines output from the detector array 26 is referenced to an absolute reference value. As a result, brightness on each display output line is referenced to the same DC voltage reference signal. After being processed by the DC restorer 104, the signal is fed into a video amplifier 122 before being output through the display cathode ray tube (CRT) 124 and projected onto the CRT output grid screen 125. Preferably, the video amplifier 122 includes an aperture corrector for improving the high frequency response of the output video signal.

The composite video signal 102 is also fed from the video buffer/DC restorer 104 to a sync stripper 126, which strips the synchronous signal from the composite video signal 102. After the synchronous signal has been stripped from the composite video signal, the synchronous signal is separated into its vertical component through a field sync recovery subcircuit 128 and into its horizontal component through a line sync filter 130. The vertical and horizonal components of the synchronous signal are then input into the timing generator 132, which processes the synchronous signal inputs and subsequently produces four outputs: a vertical drive (V-drive) component 134, a horizontal drive (H-drive) component 136, a composite blanking component 138 and a horizontal back porch clamp component 140. The V-drive and H-drive component output signals are input into the vertical and horizontal deflection amplifiers 118, 119, respectively.

The V-drive output signal 134 is input into the vertical deflection amplifier 118, which controls the vertical deflection of the video signal output from the video amplifier 122 on the CRT 124. Preferably, the vertical deflection amplifier is a closed loop linear amplifier utilizing a power operational amplifier. The vertical deflection amplifier 118 preferably has a high vertical inductance of 1 megahertz or greater so as to minimize the amplifier power requirements and thus negate the need for any additional linearity correction. The vertical deflection amplifier 118 is also connected to a display high voltage power supply 146 and a sweep fail system 148 that, in combination with a blanking system 150 that blanks line retracing on the CRT 124, prevents a particular image or images from becoming burned into the CRT display upon malfunction of the display 100.

The H-drive output 136 is subsequently input into the horizonal deflection amplifier 119. The amplifier 119 is preferably an efficient low power resonant amplifier system. The sweep of the horizontal deflection amplifier 119 is not developed from a display high voltage power supply (HVPS), as is done in conventional commercial television sets. Rather, the horizontal deflection amplifier 119 is a separate amplifier allowing it to be adjusted to fit the particular application. Further, the amplifier 119 corrects any sweep nonlinearity introduced into the H-drive signal by injection of a correcting wave form. As with the vertical deflection amplifier, the horizontal deflection amplifier 119 is coupled to the sweep fail system 148 which is in turn coupled to both the high voltage power supply 146 and the blanking system 150 to prevent an image from being burned into the CRT upon malfunction of the display.

The composite blank output signal 138 is input into the blanking system 150 of the type well known in the art to ensure blanking of the CRT grid screen 125 after each video line is painted on the CRT grid screen. The composite blank signal 138 is synchronized exactly at the beginning and end of the video period to prevent line overlap on the CRT. In addition, the H back porch clamp output 140 is input into the video buffer/DC restorer 104 and is used in the DC restoration corrections as described above.

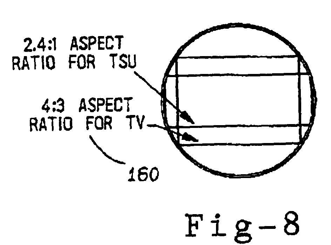

Referring to FIGS. 7 and 8, operation of the aspect ratio control of the present invention will now be described. To operate the display 100 in normal RS-170 television video output mode exhibiting a 4:3 aspect ratio, the aspect ratio switch 116 is toggled to a first position, thereby adjusting the resistance values of the potentiometers 120, 121 to first preset levels. These first preset levels adjust the gain levels of the horizontal and vertical deflection amplifiers 118, 119 to match the requirements of the RS-170 television signal output on the CRT 124. Referring to FIG. 8, a 4:3 aspect ratio for normal TV video is illustrated at 160. Such a normal aspect ratio is desirable when using the display for purposes such as video replay of taped battle field practices or for video instructional purposes or displaying imagery from standard visible cameras.

Alternatively, if the display is to be used for target scene detection and location purposes in a thermal imaging application, it is desirable to have a wider azimuth field of view to obtain a greater situational awareness. Therefore, when the aspect ratio switch 116 is toggled to a second position, the resistance values of the potantiometers 120, 121 are adjusted to second preset levels. Correspondingly, gain levels of the amplifiers are adjusted to second preset levels, thereby altering the electron beam displacement characteristics of the amplifiers 118, 119. Subsequently, the output video signal is switched to a 2.4:1 aspect ratio as shown at 162 in FIG. 8. Therefore, the need for two separate displays, one for normal TV video and one for thermal imaging video, is eliminated, as the two displays are combined into the single display 100.

Upon reading the foregoing detailed description, it should be appreciated that implementation of the variable aspect ratio display according to the present invention eliminates the need for installation of separate TV video and thermal imaging system displays in a thermal imaging system. The display of the present invention is capable of producing a video output having either an RS-170 4:3 aspect ratio for normal video applications or a 2.4:1 aspect ratio to provide a system operator with greater situational awareness in thermal imaging system applications, while providing a video signal output on the CRT having minimal blur in either application.

various other advantages of the present invention will become apparent to those skilled in the art after having the benefit of studying the foregoing text and drawings, taken in conjunction with the following claims.

## Claims

1. In a thermal imaging system including a display (124), a video signal processing circuit, comprising:
at least one amplifier (118, 119) for amplifying a video signal representative of a detected target scene (14);
a signal adjuster (120, 121) for adjusting said amplifier (118, 119) between first and second gain levels, said amplifier producing a first video signal when adjusted to said first gain level, said amplifier producing a second video signal when adjusted to said second gain level; and
a switch (116) for switching said signal adjuster (120, 121) between said first and second gain levels;
said second video signal having an azimuthally broader associated aspect ratio than said first video signal.

2. The video signal processing circuit of Claim 1, wherein said first video signal has a 4:3 aspect ratio and said second video signal has a 2.4:1 aspect ratio.

3. The video signal processing circuit of Claim 1, wherein said signal adjuster comprises a processor (84).

4. The video signal processing circuit of Claim 3, wherein said signal adjuster further comprises a potentiometer (120, 121) coupled to said at least one amplifier (118, 119).

5. The video signal processing circuit of Claim 1, wherein said at least one amplifier comprises a first amplifier (119) for amplifying a horizontal component of said video signal and a second amplifier (118) for amplifying a vertical component of said video signal.

6. The video signal processing circuit of Claim 5, wherein said signal adjuster (120, 121) adjusts said first and second amplifiers (118, 119) between said first and second gain levels to thereby adjust between said first and second video signals.

7. The video signal processing circuit of Claim 6, wherein said signal adjuster comprises a first potentiometer (120) coupled to said first amplifier (118) and a second potentiometer (121) coupled to said second amplifier (119).
